# EUROPÄISCHE PATENTSCHRIFT

(11) **EP 2 339 228 B1**
(45) Veröffentlichungstag und Bekanntmachung des Hinweises auf die Patenterteilung: **01.01.2014**
(21) Anmeldenummer: 10192611.1
(22) Anmeldetag: 25.11.2010
(51) Int. Cl.: F21S 8/12, F21V 7/00, F21V 14/04, F21Y 101/02

(54) **Lichtmodul für eine Beleuchtungseinrichtung sowie Beleuchtungseinrichtung eines Kraftfahrzeugs mit einem solchen Lichtmodul**
Light module for a lighting device and lighting device of a motor vehicle with such a light module
Module d'éclairage pour un dispositif d'éclairage et dispositif d'éclairage d'un véhicule automobile doté d'un tel module d'éclairage

(30) Priorität: 22.12.2009 DE 102009060792
(43) Veröffentlichungstag der Anmeldung: 29.06.2011
(73) Patentinhaber: Automotive Lighting Reutlingen GmbH, 72762 Reutlingen (DE)
(72) Erfinder: Stade, Florian, 44359 Dortmund (DE); Boebel, Doris, 70184 Stuttgart (DE); Scholl, Michael, 72810 Gomaringen (DE)
(74) Vertreter: Dreiss

(56) Entgegenhaltungen:
- EP-A2- 2 075 500
- EP-A2- 2 085 687
- DE-A1- 10 224 004
- DE-A1-102004 017 454
- DE-A1-102005 058 936
- DE-A1-102006 057 553
- DE-A1-102007 024 962
- US-A1- 2007 086 202
- US-A1- 2007 171 665

## Beschreibung

Die vorliegende Erfindung betrifft ein Lichtmodul für eine Beleuchtungseinrichtung eines Kraftfahrzeugs. Das Lichtmodul umfasst:
- mehrere Halbleiterlichtquellen zum Aussenden von Licht,
- mindestens zwei Reflexionsbereiche zum Reflektieren des von den Lichtquellen ausgesandten Lichts und
- ein plattenförmiges Trennglied, das zwischen mindestens zwei der Reflexionsbereiche angeordnet ist und auf dem die Lichtquellen derart befestigt sind, dass Hauptabstrahlrichtungen der Lichtquellen im Wesentlichen senkrecht zu einer optischen Achse des Lichtmoduls verlaufen.

Dabei sind die Reflexionsbereiche separaten Teilreflektorelementen zugeordnet. Ferner bildet das Trennglied ein Stützelement des Lichtmoduls, an dem die Teilreflektorelemente getrennt voneinander angeordnet und befestigt sind.

Die Erfindung betrifft außerdem eine Beleuchtungseinrichtung eines Kraftfahrzeugs mit einem solchen Lichtmodul.

Ein Lichtmodul der genannten Art ist sowohl aus der gattungsgemäßen US 2007/0086202 A1 als auch aus der EP 2 085 687 A2 bekannt.

Aus der DE 10 2008 009 820 A1 ist ein Lichtmodul bekannt, bei dem alle Reflexionsbereiche einem einzigen, gemeinsamen Reflektorelement zugeordnet sind. Die Reflexionsbereiche sind so ausgestaltet, dass das Lichtmodul ein in dem Staat oder der Region, für die das Lichtmodul vorgesehen ist, gesetzlich vorgesehene Lichtverteilung erzeugt. So muss die Lichtverteilung in Nordamerika beispielsweise der SAE-Regelung und in Europa der ECE-Regelung entsprechen. Diese Regelungen legen beispielsweise minimale und maximale Helligkeitswerte innerhalb der Lichtverteilung, die Form oder Erstreckung der Lichtverteilung beziehungsweise entsprechende Helligkeitswerte der Lichtverteilung in horizontaler und vertikaler Richtung, sowie Position, Lage und Verlauf einer eventuell vorhandenen Helldunkelgrenze fest. In aller Regel ist es so, dass zur Erzeugung einer Lichtverteilung gemäß ECE-Regelung ausgestaltete Reflexionsbereiche nicht automatisch auch zur Erzeugung einer Lichtverteilung gemäß einer anderen gesetzlichen Regelung, beispielsweise der SAE-Regelung, geeignet sind. Vielmehr ist es üblicherweise so, dass beim Einsatz des bekannten Lichtmoduls zur Erfüllung einer anderen als der vorgesehenen gesetzlichen Regelung die Reflexionsbereiche, das heißt insbesondere die entsprechenden Reflexionsflächen komplett neu ausgelegt und konstruiert werden müssen. Dies ist jedoch mit einem relativ hohen Aufwand, langen Entwicklungszeiten sowie daraus resultierenden relativ hohen Kosten verbunden.

Ausgehend von dem beschriebenen Stand der Technik liegt der vorliegenden Erfindung die Aufgabe zugrunde, ein Lichtmodul derart auszugestalten und weiterzubilden, dass es auf eine möglichst einfache Weise, kostengünstig und schnell zur Erzeugung einer Lichtverteilung gemäß einer bestimmten vorgegebenen gesetzlichen Regelung umgerüstet werden kann. Wenn das Lichtmodul beispielsweise zur Erzeugung einer Lichtverteilung gemäß ECE-Regelung ausgelegt ist, soll es erfindungsgemäß möglichst einfach, kostengünstig und schnell zur Erzeugung einer Lichtverteilung gemäß SAE-Regelung oder einer beliebig anderen gesetzlichen Regelung umgerüstet werden können. Außerdem soll das Lichtmodul besonders schnell und einfach justiert werden können.

Zur Lösung dieser Aufgabe wird ausgehend von dem Lichtmodul der eingangs genannten Art vorgeschlagen, dass die Teilreflektorelemente bewegbar an dem Stützelement angeordnet, durch Bewegen relativ zu den Lichtquellen justiert und an dem Stützelement festgelegt sind.

Die Teilreflektorelemente sind bewegbar an dem Stützelement angeordnet. Durch Bewegen relativ zu den Lichtquellen werden die Teilreflektorelemente justiert. In der justierten Position können die Teilreflektorelemente an dem Stützelement festgelegt werden. Die Teilreflektorelemente sind insbesondere mittels lösbarer Verbindungselemente an dem Stützelement befestigt, damit die Teilreflektorelemente bei Bedarf schnell und einfach gegen geeignete andere Teilreflektorelemente ausgetauscht werden können. Zur Erfüllung der jeweils geltenden gesetzlichen Regelung ist es wünschenswert, das ausgewechselte Teilreflektorelement relativ zu den diesem zugeordneten Lichtquellen zu justieren und es dann in der justierten Position festzulegen.

Im Gegensatz zu dem aus der DE 10 2008 009 820 A1 bekannten Lichtmodul sind bei der vorliegenden Erfindung die Reflexionsbereiche nicht einem einzigen, gemeinsamen Reflektorelement, sondern separaten Teilreflektorelementen zugeordnet. Zudem verfügt das Lichtmodul über ein Stützelement, an dem die einzelnen Komponenten des Lichtmoduls befestigt werden können. Erfindungsgemäß wird das Stützelement von dem sowieso vorhandenen, die Lichtquellen tragenden Trennglied gebildet. Da auf ein zusätzliches Stützelement verzichtet wird, können Bauteile eingespart und das Lichtmodul besonders klein und kostengünstig ausgestaltet werden.

So sind an den den Reflexionsbereichen zugewandten Seiten des Trennglieds die Halbleiterlichtquellen (Leuchtdioden; LEDs) angeordnet und befestigt. Außerdem sind an dem Stützelement die verschiedenen Teilreflektorelemente angeordnet und befestigt. Selbstverständlich ist es denkbar, dass beliebig weitere Komponenten des erfindungsgemäßen Lichtmoduls ebenfalls an dem Stützelement angeordnet und befestigt sind. Durch die Zuordnung der Reflexionsbereiche zu separaten Teilreflektorelementen ist es möglich, einzelne Komponenten des Lichtmoduls, insbesondere einzelne Teilreflektorelemente, zur Erfüllung einer anderen gesetzlichen Regelung gezielt gegen andere Komponenten auszutauschen, die zur Erfüllung dieser anderen gesetzlichen Regelung geeignet sind. Dabei können alle anderen Komponenten des Lichtmoduls unverändert beibehalten werden.

Wenn man bei dem erfindungsgemäßen Lichtmodul beispielsweise davon ausgeht, dass das Lichtmodul mindestens ein Teilreflektorelement zur Erzeugung einer konvergierenden Lichtverteilung sowie mindestens ein anderes Teilreflektorelement zur Erzeugung einer insbesondere in horizontaler Richtung gestreuten Lichtverteilung (sogenanntes Grundlicht) aufweist, könnte man sich vorstellen, eine Abblendlichtverteilung gemäß ECE-Regelung durch Überlagerung der beiden Teillichtverteilungen zu erzeugen. Dabei wäre es besonders vorteilhaft, wenn die Grundlichtverteilung eine im Wesentlichen horizontal verlaufende obere Helldunkelgrenze aufweist und der Spot eine ausgehend von der Fahrbahnmitte in einem Winkel von etwa 15° zur eigenen Verkehrsseite hin ansteigende obere Helldunkelgrenze aufweist. Eine Überlagerung des Grundlichts und des Spots würde also eine Abblendlichtverteilung erzeugen, die auf der Gegenverkehrsseite einen horizontalen Abschnitt einer Helldunkelgrenze aufweist (von dem Grundlicht) und auf der eigenen Verkehrsseite einen in einem Winkel von 15° ansteigenden Abschnitt der Helldunkelgrenze (von dem Spot). Zudem hätte die Abblendlichtverteilung im Zentrum und unmittelbar unterhalb der Helldunkelgrenze besonders hohe Helligkeitswerte. Bei einem solchen Lichtmodul wäre es beispielsweise denkbar, das Teilreflektorelement, welches den Spot und damit bei der Auslegung gemäß ECE-Regelung auch den 15°-Anstieg der Helldunkelgrenze erzeugt, gegen ein anderes Teilreflektorelement auszutauschen, das eine andere Form der Helldunkelgrenze auf der eigenen Verkehrsseite erzeugt, wie sie beispielsweise in der SAE-Regelung, den entsprechenden japanischen Regelungen oder beliebig anderen Regelungen vorgesehen ist.

Ebenso wäre es denkbar, beim Einsatz des erfindungsgemäßen Lichtmoduls in einer anderen Verkehrsart (zum Beispiel Linksverkehr) als derjenige Verkehrsart, für die das Lichtmodul ursprünglich vorgesehen war (zum Beispiel Rechtsverkehr), den oder die Teilreflektorelemente, welchen den Spot erzeugen, gegen mindestens ein anderes Teilreflektorelement auszutauschen, das einen Spot auf der gewünschten Verkehrsseite sowie mit dem der anderen Verkehrsart entsprechenden gewünschten Verlauf der Helldunkelgrenze erzeugt. Sofern das Grundlicht einigermaßen symmetrisch zu einer Vertikalen ausgebildet ist, können die Teilreflektorelemente, die das Grundlicht erzeugen, unverändert beibehalten bleiben, da die Grundlichtverteilung bei Rechtsverkehr und Linksverkehr die gleiche sein kann. Selbstverständlich wäre es aber auch denkbar, die Teilreflektorelemente, die das Grundlicht erzeugen, ebenfalls auszutauschen. Auf jeden Fall unverändert beibehalten werden können die an dem Stützelement angeordneten und befestigten Halbleiterlichtquellen sowie - sofern vorhanden - weitere Komponenten des Lichtmoduls.

Mit der vorliegenden Erfindung wird also ein Lichtmodul vorgeschlagen, das besonders einfach, schnell und kostengünstig für eine andere Verkehrsart und/oder eine andere gesetzliche Regelung umgerüstet werden kann.

Gemäß einer vorteilhaften Weiterbildung der vorliegenden Erfindung wird vorgeschlagen, dass die Teilreflektorelemente als halbschalenförmige Reflektoren ausgebildet sind. Diese sind lösbar an dem Stützelement befestigt, um einerseits eine sichere Befestigung an dem Stützelement und andererseits ein einfaches Austauschen der Teilreflektorelemente zu ermöglichen.

Die Teilreflektorelemente können aus Metall, beispielsweise einem Metalldruckguss, vorzugsweise Aluminiumdruckguss, gefertigt sein. Dies hätte den Vorteil einer hohen Temperaturbeständigkeit und einer guter Wärmeleitfähigkeit der Teilreflektorelemente. Gemäß einer anderen bevorzugten Ausführungsform der Erfindung wird vorgeschlagen, dass die Teilreflektorelemente aus Kunststoff, insbesondere aus einem Duroplast (auch Duromer) gefertigt sind. Duroplast ist besonderes Hitzebeständig. Die Teilreflektorelemente sind besonders leicht und können schnell und kostengünstig mittels Spritzgießen hergestellt werden. Das Stützelement sollte aus Stabilitätsgründen aus Metall bestehen. Dies ist auch deshalb erforderlich, da die Halbleiterlichtquellen an dem Stützelement befestigt sind und die von diesen erzeugte Abwärme größtenteils über das Stützelement abgeleitet wirds. Dadurch, dass bei der vorliegenden Erfindung die Teilreflektorelemente separat vom Stützelement ausgebildet sind, können die Teilreflektorelemente und das Stützelement problemlos aus unterschiedlichen Materialien gefertigt werden, wobei die verwendeten Materialien jeweils für den gewünschten Einsatz des Stützelements beziehungsweise der Teilreflektorelemente optimiert wird. Besonders vorteilhaft ist deshalb - wie gesagt - ein Stützelement aus Metall, an dem Teilreflektorelemente aus Kunststoff befestigt sind.

Gemäß einer anderen vorteilhaften Weiterbildung der vorliegenden Erfindung wird vorgeschlagen, dass in einer Lichtaustrittsrichtung des Lichtmoduls betrachtet nach den Lichtquellen mindestens ein Blendenelement angeordnet ist, welches das Austreten von durch die Lichtquellen ausgesandtem Licht direkt in Lichtaustrittsrichtung ohne vorherige Reflexion an einem der Teilreflektorelemente verhindert. Das Blendenelement schirmt also Direktlicht von den Lichtquellen ab. Das Blendenelement ist vorzugsweise an dem Stützelement, insbesondere an einer in Lichtaustrittsrichtung gerichteten Seite des Stützelements, angeordnet und befestigt. Ausgehend von dem Stützelement erstreckt sich das Blendenelement in Richtung der Reflexionsbereiche. Die Blendenelemente sind vorzugsweise derart dimensioniert, ausgestaltet und angeordnet, dass bei einem Blick in das Lichtmodul entgegen der Lichtaustrittsrichtung die Lichtquellen durch die Blendenelemente verdeckt werden. Durch die Blendenelemente und das Abschirmen von Direktlicht wird ein Blenden anderer Verkehrsteilnehmer, insbesondere entgegenkommender oder vorausfahrender Verkehrsteilnehmer, vermieden. Die Blenden sind vorzugsweise derart ausgestaltet, dass Direktlicht im Bereich unterhalb der Helldunkelgrenze für die Lichtverteilung nutzbar ist. Die Nutzung von Direktlicht kann die Effizienz des Systems erhöhen, sowie Bereiche des Nahfelds unmittelbar vor dem Kraftfahrzeug beleuchten, die durch Reflexion am Reflektor nicht erreicht werden können. Das beschriebene Blendenelement ist etwas anderes als die Blendenanordnung eines Projektionssystems, welche zur Erzeugung einer Helldunkelgrenze der Lichtverteilung dient.

Gemäß einer weiteren bevorzugten Ausführungsform wird vorgeschlagen, dass an einer in Lichtaustrittsrichtung zeigenden Seite des mindestens einen Blendenelements mindestens eine weitere Halbleiterlichtquelle angeordnet und befestigt ist. Die mindestens eine weitere Lichtquelle ist vorzugsweise zur Erzeugung einer Signalfunktion, insbesondere eines Blinklichts, eines Tagfahrlichts (Daytime Running Light; DRL), eines Standlichts und/oder eines Positionslichts ausgebildet. Mit dieser Ausgestaltung kann eine zusätzliche Signalfunktion in das Lichtmodul integriert werden, ohne dass es dafür zusätzlichen Bauraums bedarf. Auch hier ist es denkbar, aufgrund der Befestigung der weiteren Lichtquellen an dem Stützelement des Lichtmoduls, eine oder mehrere der weiteren Lichtquellen gegen andere Lichtquellen auszutauschen, um entsprechende gesetzliche Regelungen zu erfüllen.

Gemäß einer anderen bevorzugten Weiterbildung der vorliegenden Erfindung wird vorgeschlagen, dass das Lichtmodul genau zwei halbschalenförmige Teilreflektoren aufweist, die auf gegenüberliegenden Seiten des Stützelements angeordnet und befestigt sind, wobei eines der Teilreflektorelemente zur Erzeugung einer konvergierenden Lichtverteilung (sogenannter Spot) und das andere der Teilreflektorelemente zur Erzeugung einer insbesondere in horizontaler Richtung gestreuten Lichtverteilung (sogenanntes Grundlicht) ausgebildet ist. Bei einem derart ausgestalteten Lichtmodul kommen die Vorteile der vorliegenden Erfindung besonders deutlich zum Tragen, da das zur Erzeugung des Spots ausgebildete Teilreflektorelement zur Erfüllung bestimmter gesetzlicher Regelungen, z.B. der ECE-Regelung, der SAE-Regelung oder einer anderen nationalen oder regionalen Regelung, gegen ein anderes Teilreflektorelement ausgetauscht werden kann, das die geforderte Regelung erfüllt, indem es - eventuell zusammen mit dem von den anderen Teilreflektorelementen reflektierten Teillichtverteilungen - eine gewünschte, den geforderten gesetzlichen Regelungen entsprechende Lichtverteilung erzeugt. Insbesondere können durch Auswechseln des Teilreflektorelements zur Erzeugung der gebündelten Lichtverteilung die Form, Helligkeitswerte und die Farbe der Spotlichtverteilung variiert werden. Gleichzeitig können die übrigen Komponenten des erfindungsgemäßen Lichtmoduls im Wesentlichen unverändert beibehalten bleiben.

Auf diese Weise kann das Lichtmodul schnell, einfach und kostengünstig an sich ändernde gesetzliche Regelungen oder an in anderen Staaten oder Region geltende Regelungen angepasst werden. Außerdem kann das Lichtmodul auf einfache und kostengünstige Weise zum Einsatz in einer anderen als der vorgesehenen Verkehrsart (zum Beispiel Linksverkehr statt Rechtsverkehr) angepasst werden, indem einfach das Teilreflektorelement, das zur Erzeugung der konvergierenden Lichtverteilung gemäß der ursprünglichen Verkehrsart (zum Beispiel Rechtsverkehr) ausgebildet ist, gegen ein anderes Teilreflektorelement ausgetauscht wird, das zur Erzeugung einer geänderten, der anderen Verkehrsart (zum Beispiel Linksverkehr) entsprechenden Spotlichtverteilung ausgebildet ist.

Gemäß einer weiteren bevorzugten Ausführungsform der Erfindung wird vorgeschlagen, dass die Anzahl der Halbleiterlichtquellen, die dem Teilreflektorelement zur Erzeugung der konvergierenden Lichtverteilung zugeordnet sind, geringer ist als die Anzahl der Halbleiterlichtquellen, die dem Teilreflektorelement zur Erzeugung der gestreuten Lichtverteilung zugeordnet sind. Vorteilhafterweise sind die einem der Teilreflektorelemente zugeordneten Lichtquellen derart nebeneinander angeordnet, dass ihre Längserstreckung größer ist als ihre Breite bzw. Höhe und die Längserstreckung im Wesentlichen parallel zu einer optischen Achse des Lichtmoduls verläuft. Wenn die halbschalenförmigen Teilreflektorelemente in etwa die gleiche Brennweite aufweisen, würde die durch die verschiedenen Teilreflektorelemente erzeugten unterschiedlichen Teillichtverteilungen im Wesentlichen nur durch die unterschiedlichen Längserstreckungen der den verschiedenen Teilreflektorelementen jeweils zugeordneten Halbleiterlichtquellen erzeugt werden. Die gleiche Brennweite der halbschalenförmigen Teilreflektorelemente hat den Vorteil, dass das erfindungsgemäße Lichtmodul symmetrisch zum plattenförmigen Trennglied ausgebildet ist, wodurch das äußere Erscheinungsbild des Lichtmoduls deutlich verbessert wird. Dies ist insbesondere beim Einsatz des erfindungsgemäßen Lichtmoduls in einer Beleuchtungseinrichtung für Kraftfahrzeuge interessant, bei denen eine Lichtaustrittsöffnung im Gehäuse der Beleuchtungseinrichtung durch eine klare Scheibe, das heißt durch eine Abdeckscheibe, die zumindest bereichsweise ohne optisch wirksame Elemente (zum Beispiel Prismen) versehen ist, verschlossen ist, durch die von außen ein Blick auf das Lichtmodul möglich ist.

Eine bevorzugte Ausführungsform der vorliegenden Erfindung wird nachfolgend anhand der Zeichnung näher erläutert. Dabei sind funktionsäquivalente Bauelemente mit den gleichen Bezugszeichen bezeichnet. Die einzelnen Bauelemente und Komponenten haben die angegebenen Eigenschaften und Vorteile auch einzeln, also ohne die übrigen dargestellten und beschriebenen Bauelemente und Komponenten, ohne dass dieses im Einzelfall jeweils erwähnt ist. Es zeigen:
- Figur 1: eine erfindungsgemäße Beleuchtungseinrichtung gemäß einer bevorzugten Ausführungsform;
- Figur 2: ein erfindungsgemäßes Lichtmodul einer Beleuchtungseinrichtung gemäß einer bevorzugten Ausführungsform;
- Figur 3: eine von einem der Teilreflektorelemente des Lichtmoduls aus Figur 2 erzeugte Grundlichtverteilung;
- Figur 4: eine von einem der Teilreflektorelemente des Lichtmoduls aus Figur 2 gemäß einer bevorzugten Ausführungsform erzeugte Spotlichtverteilung für Rechtsverkehr;
- Figur 5: eine von dem Lichtmodul gemäß Figur 2 erzeugte Abblendlichtverteilung; und
- Figur 6: eine von einem der Teilreflektorelemente des Lichtmoduls aus Figur 2 gemäß einer weiteren Ausführungsform erzeugte Spotlichtverteilung für Linksverkehr.

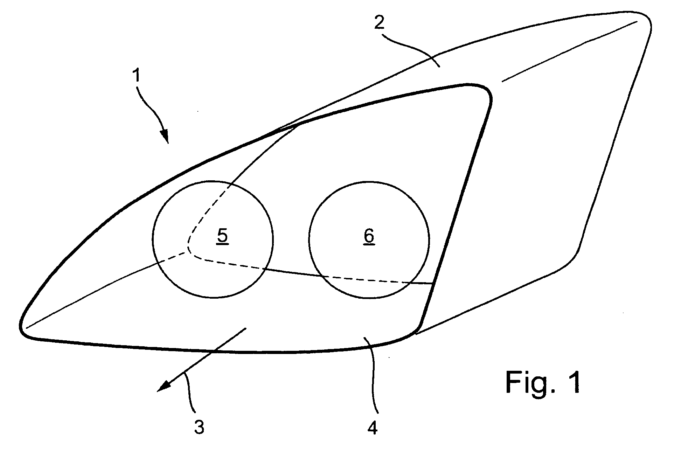

Eine erfindungsgemäße Beleuchtungseinrichtung für Kraftfahrzeuge ist in Figur 1 in ihrer Gesamtheit mit dem Bezugszeichen 1 bezeichnet. Die Beleuchtungseinrichtung 1 ist in dem dargestellten Ausführungsbeispiel als ein Kraftfahrzeugscheinwerfer ausgebildet. Sie umfasst ein Gehäuse 2, das vorzugsweise aus Kunststoff gefertigt ist. In einer Lichtaustrittsrichtung 3 weist das Gehäuse 2 eine Lichtaustrittsöffnung auf, die durch eine transparente Abdeckscheibe 4 verschlossen ist. Die Abdeckscheibe 4 schützt das Innere des Gehäuses 2 sowie die darin angeordneten Scheinwerferkomponenten vor Feuchtigkeit und Verschmutzung. Die Abdeckscheibe 4 kann als eine sogenannte klare Scheibe ohne optisch wirksame Profile (zum Beispiel Prismen) ausgebildet sein. Alternativ kann die Scheibe 4 zumindest bereichsweise mit optisch wirksamen Profilen versehen sein. Im Inneren des Scheinwerfergehäuses 2 sind in dem dargestellten Ausführungsbeispiel zwei Lichtmodule 5, 6 angeordnet. Die Lichtmodule 5, 6 sind fest oder relativ zum Scheinwerfergehäuse 2 bewegbar im Gehäuse 2 angeordnet.

Die Lichtmodule 5, 6 erzeugen entweder jedes für sich eine gewünschte Lichtverteilung, beispielsweise eine Abblendlicht-, Fernlicht-, Stadtlicht-, Landstraßen-, Autobahnlicht-, Nebellicht-, Tagfahrlicht-, Standlicht- oder Positionslichtverteilung. Alternativ wirken die beiden Lichtmodule 5, 6 zur Erzeugung der gewünschten Lichtverteilung zusammen, so dass jedes der beiden Lichtmodule 5, 6 einen Teil der gewünschten Gesamtlichtverteilung erzeugt. Die Lichtmodule 5, 6 können als Reflexionsmodule oder als Projektionsmodule ausgebildet sein. Bei einem Reflexionsmodul wird von einer oder mehreren Lichtquellen ausgesandtes Licht durch einen Reflektor zur Erzeugung einer gewünschten Lichtverteilung oder Teillichtverteilung auf die Fahrbahn vor das Kraftfahrzeug reflektiert. Bei einem Projektionssystem wird das reflektierte Licht von einer Abbildungsoptik, beispielsweise einer Projektionslinse, zur Erzeugung der gewünschten Lichtverteilung beziehungsweise Teillichtverteilung auf die Fahrbahn projiziert. Falls die gewünschte Lichtverteilung eine Helldunkelgrenze aufweist, ist bei dem Projektionssystem zwischen dem Reflektor und der Projektionslinse eine Blendenanordnung vorgesehen, deren Oberkante durch die Projektionslinse als Helldunkelgrenze auf die Fahrbahn vor das Kraftfahrzeug projiziert wird.

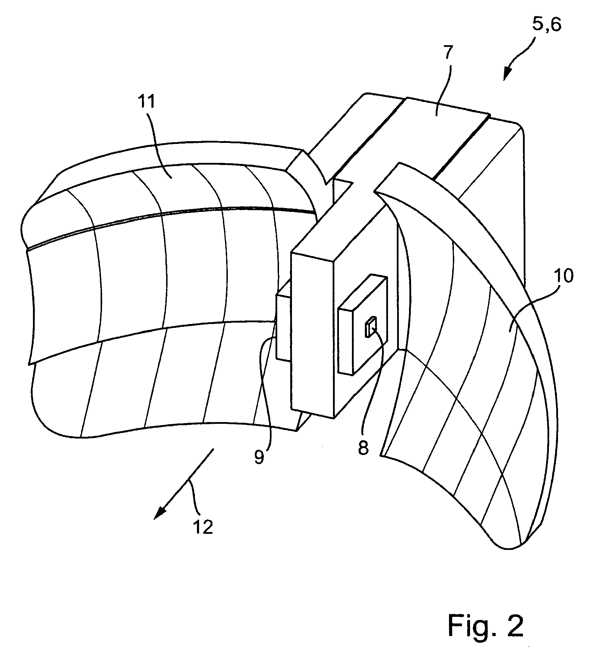

Zumindest eines der Lichtmodule 5, 6 ist als ein erfindungsgemäßes Lichtmodul ausgebildet, wie es beispielhaft in Figur 2 dargestellt ist. Das Lichtmodul 5, 6 umfasst ein plattenförmiges Trennglied 7, das ein Stützelement des Lichtmoduls 5, 6 bildet. Die wesentlichen Komponenten des Lichtmoduls 5, 6 sind an dem Stützelement 7 angeordnet und daran befestigt. An den beiden gegenüberliegenden Seiten rechts und links des Stützelements 7 sind Halbleiterlichtquellen 8, 9 angeordnet. In dem dargestellten Ausführungsbeispiel werden Halbleiterlichtquellen (LEDs) der Firma Philips Lumileds Luxeon Altilon eingesetzt. Selbstverständlich können zur Realisierung der vorliegenden Erfindung auch beliebig andere LEDs 8, 9 verwendet werden. Das Stützelement 7 besteht vorzugsweise aus einem Material mit einer hohen Wärmeleitfähigkeit, beispielsweise Metall, insbesondere Aluminiumdruckguss. Dadurch kann die durch die LEDs 8, 9 während ihres Betriebs erzeugte Abwärme besonders gut abgeleitet und an die Umgebung abgegeben werden. Das Stützelement 7 dient also gleichzeitig auch als Kühlkörper für die LEDs 8, 9.

In den beiden Halbräumen, in welche die LEDs 8, 9 Licht abstrahlen, sind zwei Reflexionsbereiche vorgesehen, die separaten Teilreflektorelementen 10, 11 zugeordnet sind. Die LEDs 8, 9 sind in Richtung der Reflexionsbereiche gerichtet an dem Stützelement 7 befestigt. Die Teilreflektorelemente 10, 11 sind als halbschalenförmige Reflektoren ausgebildet. Die Hauptabstrahlrichtung der Lichtquellen 8, 9 ist im Wesentlichen senkrecht zu einer optischen Achse 12 des Lichtmoduls 5, 6 ausgerichtet. Die beiden Teilreflektorelemente 10, 11 sind ebenfalls an dem Stützelement 7 angeordnet und daran befestigt. Die Teilreflektorelemente 10, 11 sind bewegbar relativ zum Stützelement 7 angeordnet, so dass die Lage und Position der Reflexionsflächen der Teilreflektorelemente 10, 11 relativ zu den LEDs 8, 9 justiert und in der justierten Position festgelegt werden kann. Zum Festlegen der Teilreflektorelemente 10, 11 an dem Stützelement 7 werden vorzugsweise lösbare Befestigungselemente, wie beispielsweise Schrauben oder ähnliches verwendet. Ebenfalls denkbar wäre es, die Teilreflektorelemente mittels Kleben, Schweißen, Klipsen, etc. an dem Stützelement 7 zu befestigten. Die Teilreflektorelemente 10, 11 können ebenfalls aus einem besonders gut wärmeleitfähigen Material, wie beispielsweise Metall, vorzugsweise Aluminiumdruckguss, ausgebildet sein. Zum Zwecke einer Reduzierung des Gewichts des erfindungsgemäßen Lichtmoduls 5, 6 ist es jedoch besonders vorteilhaft, wenn die Teilreflektorelemente 10, 11 aus Kunststoff, insbesondere aus einem Duroplast oder Duromer, gefertigt sind.

Ein besonderer Aspekt der vorliegenden Erfindung ist darin zu sehen, dass die Reflexionsbereiche nicht Teil eines einzigen, gemeinsamen Reflektors des Lichtmoduls sind, sondern dass die Reflexionsbereiche separaten Teilreflektorelementen 10, 11 zugeordnet sind, die jeweils einzeln an dem Stützelement 7 lösbar befestigbar sind. Das hat den Vorteil, dass das Lichtmodul 5, 6 auf einfache Weise schnell und kostengünstig zur Erzeugung einer anderen als der vorgesehenen Lichtverteilung umgerüstet werden kann. Auf diese Weise kann das Lichtmodul 5, 6 an geänderte gesetzliche Bestimmungen (zum Beispiel neueste Version einer ECE-Regelung), an in anderen Ländern oder Regionen geltende Regelungen (SAE-Regelung, ECE-Regelung oder entsprechende japanische Regelung), aber auch an eine andere Verkehrsart (Linksverkehr, Rechtsverkehr) angepasst werden. Dazu muss lediglich ein kleiner Teil des Lichtmoduls 5, 6 ausgewechselt werden, der übrige Teil des Lichtmoduls 5, 6 kann unverändert übernommen werden. Es ist also nicht erforderlich, um geänderten gesetzlichen Anforderungen zu entsprechen oder das Lichtmodul 5, 6 auf eine andere Verkehrsart umzurüsten, das komplette Lichtmodul 5, 6 neu auszulegen und zu konstruieren. Die Anpassung des Lichtmoduls 5, 6 kann vielmehr bereits mit dem Austausch eines oder mehrerer weniger Teile und Komponenten des Lichtmoduls 5, 6 erreicht werden.

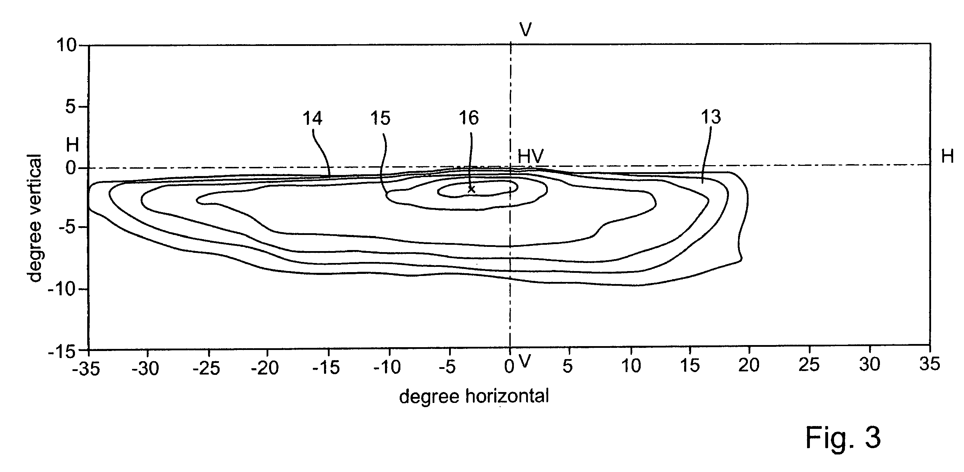

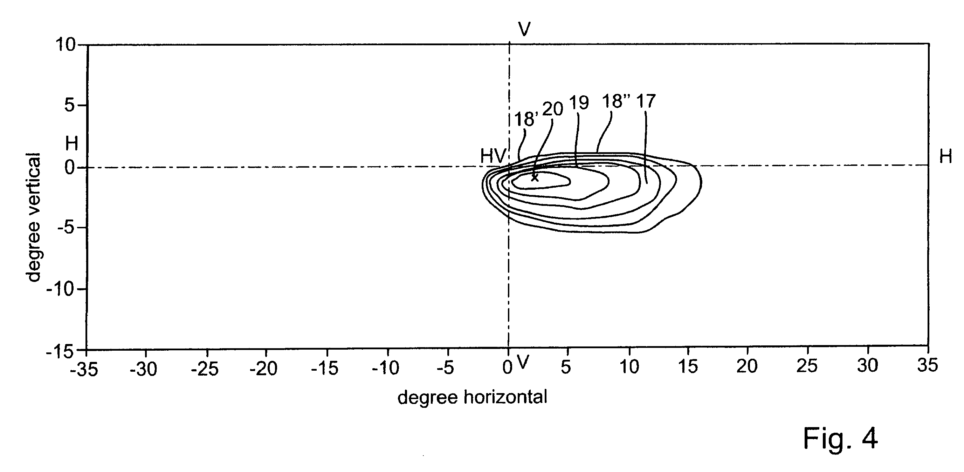

Bei dem in Figur 2 gezeigten Ausführungsbeispiel des erfindungsgemäßen Lichtmoduls 5, 6 sind genau zwei halbschalenförmige Teilreflektorelemente 10, 11 vorgesehen, die auf gegenüberliegenden Seiten des Stützelements 7 angeordnet und daran befestigt sind. Eines der Teilreflektorelemente 10 ist zur Erzeugung einer insbesondere in horizontaler Richtung gestreuten Lichtverteilung (vergleiche Figur 3) und das andere der Teilreflektorelemente 11 ist zur Erzeugung einer konvergierenden Lichtverteilung (vergleiche Figur 4) ausgebildet.

Figur 3 zeigt die in horizontaler Richtung gestreute Lichtverteilung 13, wie sie auf einem vor der Beleuchtungseinrichtung 1 des Kraftfahrzeugs angeordneten Messschirm abgebildet wird. Auf dem Messschirm ist eine Horizontale HH und eine dazu senkrecht verlaufende Vertikale VV eingezeichnet. Der Schnittpunkt der Horizontalen HH und der Vertikalen VV ist mit HV bezeichnet. Die in Figur 3 gezeigte in horizontaler Richtung gestreute Lichtverteilung 13 weist eine obere Helldunkelgrenze 14 mit horizontalem Verlauf auf. Im Inneren der Lichtverteilung 13 sind sogenannte Isoluxlinien 15 eingezeichnet, die Bereiche gleicher Lichtintensität kennzeichnen. Die größte Helligkeit herrscht in einem Bereich 16 der Lichtverteilung 13, der sich in horizontaler Richtung von etwa -5° bis 0° und in vertikaler Richtung von etwa -3° bis -1° erstreckt. Insgesamt erstreckt sich die Grundlichtverteilung 13 in horizontaler Richtung von etwa -35° bis +20° sowie in vertikaler Richtung von etwa -10° bis -1°. Selbstverständlich kann die von dem ersten Teilreflektorelement 10 erzeugte Grundlichtverteilung 13 auch symmetrisch zur Vertikalen VV ausgebildet sein. Alternativ kann die Grundlichtverteilung 13 auch bezüglich ihrer Form sowie der Anordnung und dem Betrag der Helligkeitsbereiche 15, 16 von der dargestellten Ausführungsform abweichen.

Figur 4 zeigt die von dem anderen Teilreflektorelement 11 erzeugte konvergierende Lichtverteilung 17, wie sie auf einem vor der Beleuchtungseinrichtung 1 angeordneten Messschirm abgebildet wird. Das Spotlicht 17 weist ebenfalls eine obere Helldunkelgrenze 18 auf, die einen ansteigenden Abschnitt 18' sowie einen im Wesentlichen horizontalen Abschnitt 18'' umfasst. Außerdem sind in der Spotlichtverteilung 17 ebenfalls Isoluxlinien 19, also Bereiche gleicher Helligkeitswerte, eingezeichnet. Der Bereich mit der größten Helligkeit in der Lichtverteilung 17 ist mit dem Bezugszeichen 20 bezeichnet. Der Bereich 20 erstreckt sich bei der Spotlichtverteilung 17 in horizontaler Richtung von etwa 0° bis 5° und in vertikaler Richtung von etwa -2° bis etwas unterhalb von 0°. Die Gesamterstreckung der Spotlichtverteilung 17 verläuft in horizontaler Richtung von etwa -2° bis +16° sowie in vertikaler Richtung von etwa -6° bis +1°.

Das Besondere an der Spotlichtverteilung 17 ist, dass sie eine für den ECE-Verkehrsraum vorgeschriebene typische Helldunkelgrenze 18 mit einem in einem Winkel von etwa 15° ansteigenden Abschnitt 18'. Scheinwerfer im SAE-Verkehrsraum oder gemäß den japanischen Regelungen erzeugen üblicher Weise eine Helldunkelgrenze mit einem davon abweichenden Verlauf. Bei der Grundlichtverteilung 13 handelt es sich dagegen um eine Lichtverteilung, die sowohl im ECE-Verkehrsraum als auch im SAE-Verkehrsraum oder in anderen Verkehrsräumen mit abweichenden gesetzlichen Anforderungen an die Lichtverteilung eingesetzt werden kann.

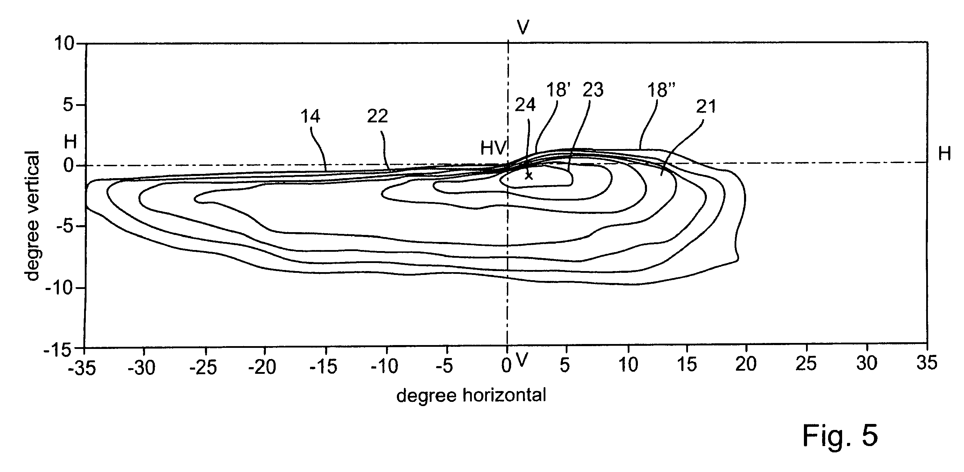

Durch die Überlagerung der Grundlichtverteilung 13 und des Spotlichts 17 ergibt sich die in Figur 5 gezeigte Gesamtlichtverteilung 21 des Lichtmoduls 5, 6. Auch die Gesamtlichtverteilung 21 ist in einer Form wiedergegeben, wie sie auf einem vor der Beleuchtungseinrichtung 1 angeordneten Messschirm abgebildet wird. Die Lichtverteilung 21 entspricht im Wesentlichen einer Abblendlichtverteilung gemäß ECE-Regelung. Die Lichtverteilung 21 umfasst eine obere Helldunkelgrenze 22, die sich aus dem horizontalen Abschnitt 14 der Grundlichtverteilung 13, sowie dem ansteigenden Abschnitt 18' sowie dem im Wesentlichen horizontalen Abschnitt 18" der Spotlichtverteilung 17 zusammensetzt. Auch in der Abblendlichtverteilung 21 sind Isoluxlinien 23 eingezeichnet. Der Bereich mit der größten Helligkeit ist mit dem Bezugszeichen 24 bezeichnet. Er liegt in horizontaler Richtung etwa zwischen -1° und +5°. In vertikaler Richtung erstreckt sich der Bereich 24 in etwa von -3° bis knapp unterhalb von 0°.

Falls nun geplant ist, das Lichtmodul 5, 6 statt im ECE-Verkehrsraum in einem anderen Verkehrsraum mit anderen gesetzlichen Regelungen für das Abblendlicht, insbesondere für den Verlauf der oberen Helldunkelgrenze 22, einzusetzen, bietet das erfindungsgemäße Lichtmodul die Möglichkeit, einfach das Teilreflektorelement 11, das für die Erzeugung der Spotlichtverteilung 17 mit dem für den ECE-Verkehrsraum typischen Verlauf der Helldunkelgrenze 18', 18" durch ein anderes Teilreflektorelement zu ersetzen, dessen Reflexionsfläche so ausgebildet ist, dass es eine Spotlichtverteilung für den gewünschten Verkehrsraum erzeugt. So wäre es beispielsweise denkbar, dass das geänderte Teilreflektorelement eine Spotlichtverteilung mit einer oberen Helldunkelgrenze erzeugt, die einen stufenförmigen Übergang zwischen zwei im Wesentlichen horizontalen Abschnitten aufweist, so wie gemäß SAE-Regelung vorgeschrieben.

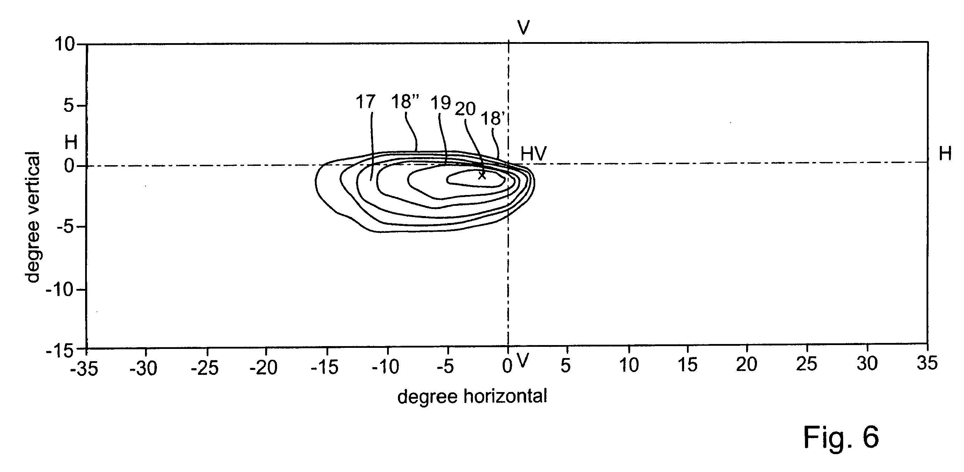

Wenn nun gemäß einer alternativen Ausführungsform das erfindungsgemäße Lichtmodul 5, 6 statt für Rechtsverkehr für eine andere Verkehrsart, insbesondere Linksverkehr ausgelegt werden soll, wäre es auch in diesem Fall theoretisch möglich, durch einfaches und schnelles Auswechseln des Teilreflektorelements 11, das zur Erzeugung der Lichtverteilung 17 auf der eigenen Verkehrsseite zuständig ist, durch ein anderes Teilreflektorelement 11' zu ersetzen, das eine Spotlichtverteilung 17' für die eigene Verkehrsseite bei Linksverkehr erzeugt. Die entsprechende Spotlichtverteilung 17' für Linksverkehr ist in Figur 6 beispielhaft dargestellt, wie sie auf einem vor der Beleuchtungseinrichtung 1 angeordneten Messschirm abgebildet wird. Insbesondere umfasst die Spotlichtverteilung 17' für Linksverkehr einen beleuchteten Bereich oberhalb der Horizontalen HH auf der linken Seite, also der eigenen Verkehrsseite bei Linksverkehr. Eine Überlagerung der Spotlichtverteilung 17' für Linksverkehr mit der durch das Teilreflektorelement 10 erzeugten Grundlichtverteilung 13 würde zu einer Abblendlichtverteilung führen, die im Wesentlichen den Anforderungen bei Linksverkehr entsprechen würde. Insbesondere wäre eine Ausleuchtung oberhalb der Horizontalen HH auf der Gegenverkehrsseite unterbunden.

Selbstverständlich ließe sich eine für Linksverkehr optimale Abblendlichtverteilung erzielen, wenn auch das Teilreflektorelement 10 gegen ein anderes Teilreflektorelement 10' ausgetauscht würde, welches eine zu der Lichtverteilung 13 aus Figur 3 um die Vertikale VV gespiegelte Lichtverteilung 13' erzeugt. Selbst in diesem Fall hätte das erfindungsgemäße Lichtmodul 5, 6 noch deutliche Vorteile gegenüber den bekannten Lichtmodulen, da das Stützelement 7 mit den daran seitlich befestigten LEDs 8, 9 sowie die gesamte Elektronik zur Energieversorgung und Ansteuerung der LEDs 8, 9 in unveränderter Form beibehalten werden könnte. Des weiteren wäre es denkbar, das Teilreflektorelement 10 auszugestalten, dass es statt der in Figur 3 gezeigten zur Vertikalen VV asymmetrischen Lichtverteilung 13 eine zur Vertikalen VV im Wesentlichen symmetrische, als spiegelbildliche Grundlichtverteilung 13 erzeugt. In einem solchen Fall könnte durch einfachen Austausch des Teilreflektorelements 11 das Lichtmodul 5, 6 einfach in eine andere Verkehrsart, beispielsweise von Rechtsverkehr auf Linksverkehr umgeschaltet werden.

In Lichtaustrittsrichtung 12 des Lichtmoduls 5, 6 betrachtet nach den Lichtquellen 8, 9 kann mindestens ein Blendenelement (nicht dargestellt) an dem Stützelement 7 angeordnet und befestigt sein, welches das Austreten von durch die LEDs ausgesandtem Licht direkt in Lichtaustrittsrichtung 12 ohne vorherige Reflexion an einem der Teilreflektorelemente 10, 11 verhindert. Dadurch kann eine Blendung anderer Verkehrsteilnehmer durch Direktlicht verhindert werden. Es ist denkbar, dass an einer in Lichtaustrittsrichtung 12 zeigenden Seite des mindestens einen Blendenelements mindestens eine weitere Halbleiterlichtquelle angeordnet und befestigt ist, die beispielsweise zur Erzeugung einer Signalfunktion, insbesondere eines Blinklichts, eines Tagfahrlichts, eines Stadtlichts und/oder eines Positionslichts, ausgebildet ist. Das Tagfahrlicht könnte gedimmt auch als Positionslicht oder Standlicht betrieben werden.

Die halbschalenförmigen Reflektorelemente 10, 11 weisen vorzugsweise in etwa die gleiche Brennweite auf. Die Halbleiterlichtquellen 9, die dem Teilreflektorelement 11 zur Erzeugung der konvergierenden Lichtverteilung 17, 17' zugeordnet sind, ist vorzugsweise geringer als die Anzahl der Lichtquellen 8, die dem Teilreflektorelement 10 zur Erzeugung der gestreuten Lichtverteilung 13 zugeordnet sind. Besonders bevorzugt ist, wenn die einem der Teilreflektorelemente 10; 11 zugeordneten Lichtquellen 8, 9 derart nebeneinander angeordnet sind, dass deren Längserstreckung größer ist als deren Höhe beziehungsweise Breite und die Längserstreckung im Wesentlichen parallel zu einer optischen Achse des Lichtmoduls 5, 6 beziehungsweise zu dessen Lichtaustrittsrichtung 12 verläuft. Als Lichtquellen 8 zur Erzeugung der Grundlichtverteilung 13 wird vorzugsweise ein 1x4 bzw. 1x5 LED-Array verwendet. Zur Erzeugung des Spotlichts 17, 17' wird vorzugsweise ein 1x2 LED-Array als Lichtquellen 9 eingesetzt. D.h., dass das LED-Array 8 für das Grundlicht 13 länger ist als das LED-Array 9 für den Spot 17, 17'.

Zum Positionieren der Teilreflektorelemente 10, 11 relativ zu dem Stützelement 7 können Positionierungsmittel, wie beispielsweise Passstifte vorgesehen sein. Die Befestigung der Teilreflektorelemente 10, 11 an dem Stützelement 7 kann mittels Schrauben, Kleben oder Verrastung erfolgen. Die Teilreflektorelemente 10, 11 können statt aus Kunststoff auch aus Aluminiumdruckguss hergestellt sein. Auch das Stützelement 7 ist aus Metall, vorzugsweise aus Aluminiumdruckguss gefertigt.

Bei dem erfindungsgemäßen Lichtmodul 5, 6 können als Halbleiterlichtquellen 8, 9 verschiedene LEDs verwendet werden. Die LEDs 9 zur Erzeugung des Anstiegs 18' kann im Vergleich zu den LEDs 8 zur Erzeugung des Grundlichts 13 eine kleinere lichtimitierende Fläche aufweisen. Dadurch ergibt sich die Möglichkeit, das Maximum 24 der resultierenden Lichtverteilung 21 in vertikaler Richtung nahe an den Anstieg 18' zu legen, woraus eine große Reichweite resultiert. Die LEDs 8, die eine wagrechte Helldunkel-Grenze 14 generieren, können eine größere lichtimitierende Fläche aufweisen. Optimalerweise bestehen diese LEDs 8 aus einem in Fahrzeugrichtung, d.h. in Lichtaustrittsrichtung 12, ausgedehntes LED-Array, ähnlich wie eine Längswendel in einem konventionellen Halogensystem. Damit ist es möglich, eine scharfe, wagrechtliegende Helldunkel-Grenze 14 und eine große Seitenausleuchtung zu erzielen.

## Patentansprüche

1. Lichtmodul (5; 6) für eine Beleuchtungseinrichtung (1) eines Kraftfahrzeugs, das Lichtmodul (5; 6) umfassend:
- mehrere Halbleiterlichtquellen (8, 9) zum Aussenden von Licht,
- mindestens zwei Reflexionsbereiche (10, 11) zum Reflektieren des von den Lichtquellen (8, 9) ausgesandten Lichts und
- ein plattenförmiges Trennglied (7), das zwischen mindestens zwei der Reflexionsbereiche (10, 11) angeordnet ist und auf dem die Lichtquellen (8, 9) derart befestigt sind, dass Hauptabstrahlrichtungen der Lichtquellen (8, 9) im Wesentlichen senkrecht zu einer optischen Achse des Lichtmoduls (5; 6) verlaufen, wobei die Reflexionsbereiche separaten Teilreflektorelementen (10, 11) zugeordnet sind und wobei das Trennglied ein Stützelement (7) des Lichtmoduls (5; 6) bildet, an dem die Teilreflektorelemente (10, 11) getrennt voneinander angeordnet und befestigt sind, **dadurch gekennzeichnet, dass** die Teilreflektorelemente (10, 11) bewegbar an dem Stützelement (7) angeordnet, durch Bewegen relativ zu den Lichtquellen (8, 9) justiert und an dem Stützelement (7) festgelegt sind.

2. Lichtmodul (5; 6) nach Anspruch 1, **dadurch gekennzeichnet, dass** die Teilreflektorelemente (10, 11) als halbschalenförmige Reflektoren ausgebildet sind.

3. Lichtmodul (5; 6) nach Anspruch 1 oder 2, **dadurch gekennzeichnet, dass** die Teilreflektorelemente (10, 11) aus Kunststoff, insbesondere aus einem Duroplast, gefertigt sind.

4. Lichtmodul (5; 6) nach einem der Ansprüche 1 bis 3, **dadurch gekennzeichnet, dass** in einer Lichtaustrittsrichtung (12) des Lichtmoduls (5; 6) betrachtet nach den Lichtquellen (8, 9) mindestens ein Blendenelement angeordnet ist, welches das Austreten von durch die Lichtquellen (8, 9) ausgesandtem Licht direkt in Lichtaustrittsrichtung (12) ohne vorherige Reflexion an einem der Teilreflektorelemente (10, 11) verhindert.

5. Lichtmodul (5; 6) nach Anspruch 4, **dadurch gekennzeichnet, dass** an einer in Lichtaustrittsrichtung (12) zeigenden Seite des mindestens einen Blendenelements mindestens eine weitere Halbleiterlichtquelle befestigt ist.

6. Lichtmodul (5; 6) nach Anspruch 5, **dadurch gekennzeichnet, dass** die mindestens eine weitere Lichtquelle zur Erzeugung einer Signalfunktion, insbesondere eines Blinklichts, eines Tagfahrlichts, eines Standlichts und/oder eines Positionslichts, ausgebildet ist.

7. Lichtmodul (5; 6) nach einem der Ansprüche 1 bis 6, **dadurch gekennzeichnet, dass** das Lichtmodul (5; 6) genau zwei halbschalenförmige Teilreflektorelemente (10, 11) aufweist, die auf gegenüberliegenden Seiten des Stützelements (7) angeordnet und befestigt sind, wobei eines der Teilreflektorelemente (11) zur Erzeugung einer konvergierenden Lichtverteilung (17; 17') und das andere der Teilreflektorelemente (10) zur Erzeugung einer insbesondere in horizontaler Richtung gestreuten Lichtverteilung (13) ausgebildet ist.

8. Lichtmodul (5; 6) nach Anspruch 7, **dadurch gekennzeichnet, dass** die Anzahl der Lichtquellen (9), die dem Teilreflektorelement (11) zur Erzeugung der konvergierenden Lichtverteilung (17; 17') zugeordnet sind, geringer ist als die Anzahl der Lichtquellen (8), die dem Teilreflektorelement (10) zur Erzeugung der gestreuten Lichtverteilung (13) zugeordnet sind.

9. Lichtmodul (5; 6) nach Anspruch 8, **dadurch gekennzeichnet, dass** die einem der Teilreflektorelemente (10, 11) zugeordneten Lichtquellen (8, 9) derart nebeneinander angeordnet sind, dass deren Längserstreckung größer ist als deren Breite und die Längserstreckung im Wesentlichen parallel zu einer optischen Achse des Lichtmoduls (5; 6) verläuft.

10. Lichtmodul (5; 6) nach einem der Ansprüche 1 bis 9, **dadurch gekennzeichnet, dass** die halbschalenförmigen Teilreflektorelemente (10, 11) in etwa die gleiche Brennweite aufweisen.

11. Beleuchtungseinrichtung (1) eines Kraftfahrzeugs, umfassend mindestens ein Lichtmodul (5; 6) nach einem der Ansprüche 1 bis 10.

## Claims

1. A light module (5; 6) for a lighting device (1) of a motor vehicle, the light module (5; 6) including:
- a plurality of semiconductor light sources (8, 9) for emitting light,
- at least two reflective regions (10, 11) for reflecting the light emitted by the light sources (8, 9), and
- a platelike separator element (7), which is disposed between at least two of the reflective regions (10, 11) and on which the light sources (8, 9) are secured in such a way that primary projection directions of the light sources (8, 9) extend substantially perpendicular to an optical axis of the light module (5; 6), and the reflective regions are associated with separate partial reflector elements (10, 11), and the separator element forms a support element (7) of the light module (5; 6), on which element the partial reflector elements (10, 11) are disposed and secured separately from one another, **characterized in that** the partial reflector elements (10, 11) are disposed movably on the support element (7), are adjusted by moving relative to the light sources (8, 9), and are fixed on the support element (7).

2. The light module (5; 6) of claim 1, **characterized in that** the partial reflector elements (10, 11) are embodied as half-shell-shaped reflectors.

3. The light module (5; 6) of claim 1 or 2, **characterized in that** the partial reflector elements (10, 11) are made of plastic, in particular a thermosetting plastic.

4. The light module (5; 6) of one of claims 1-3, **characterized in that** at least one shielding element is disposed downstream of the light sources (8, 9) as viewed in a light exit direction (12) of the light module (5; 6), which shielding element prevents light emitted by the light sources (8, 9) from exiting directly in the light exit direction (12) without first being reflected at one of the partial reflector elements (10, 11).

5. The light module (5; 6) of claim 4, **characterized in that** at least one further semiconductor light source is secured on one side, pointing in the light exit direction (12), of the at least one shielding element.

6. The light module (5; 6) of claim 5, **characterized in that** the at least one further light source is embodied for generating a signaling function, in particular of a blinking light, a daytime running light, a parking light and/or a position light.

7. The light module (5; 6) of one of claims 1-6, **characterized in that** the light module (5; 6) has precisely two half-shell-shaped partial reflector elements (10, 11), which are disposed and secured on opposite sides of the support element (7), and one of the partial reflector elements (11) is embodied for generating a convergent light distribution (17; 17') and the other of the partial reflector elements (10) is embodied for generating a scattered light distribution (13), in particular in the horizontal direction.

8. The light module (5; 6) of claim 7, **characterized in that** the number of light sources (9) which are associated with the partial reflector element (11) for generating the convergent light distribution (17; 17') is less than the number of light sources (8) which are associated with the partial reflector element (10) for generating the scattered light distribution (13).

9. The light module (5; 6) of claim 8, **characterized in that** the light sources (8, 9) associated with one of the partial reflector elements (10, 11) are disposed next to one another in such a way that their length is greater than their width, and the length extends substantially parallel to an optical axis of the light module (5; 6).

10. The light module (5; 6) of one of claims 1-9, **characterized in that** the half-shell-shaped partial reflector elements (10, 11) have approximately the same focal length.

11. A lighting device (1) of a motor vehicle, including at least one light module (5; 6) of one of claims 1-10.

## Revendications

1. Module d'éclairage (5; 6) destiné à un dispositif d'éclairage (1) d'un véhicule automobile, le module d'éclairage (5; 6) comprenant:
- une pluralité de sources lumineuses à semi-conducteurs (8, 9) destinées à émettre de la lumière,
- au moins deux zones réfléchissantes (10, 11) destinées à réfléchir la lumière émise par les sources lumineuses (8, 9), et
- un séparateur en forme de plaque (7) qui est disposé entre au moins deux des zones réfléchissantes (10, 11) et sur lequel les sources lumineuses (8, 9) sont montées de telle manière que les directions principales de rayonnement des sources lumineuses (8, 9) s'étendent sensiblement perpendiculairement à un axe optique du module d'éclairage (5; 6), dans lequel les zones réfléchissantes sont associées à des éléments réflecteurs partiels séparés (10, 11), et dans lequel le séparateur forme un élément de support (7) du module d'éclairage (5; 6) sur lequel les éléments réflecteurs partiels (10, 11) sont disposés et fixés séparément les uns des autres, **caractérisé en ce que** les éléments réflecteurs partiels (10, 11) sont disposés de manière mobile sur l'élément de support (7), sont ajustés par déplacement par rapport aux sources lumineuses (8, 9) et sont fixés à l'élément de support (7).

2. Module d'éclairage (5; 6) selon la revendication 1, **caractérisé en ce que** les éléments réflecteurs partiels (10, 11) sont réalisés sous la forme de réflecteurs en forme de demi-coquille.

3. Module d'éclairage (5; 6) selon la revendication 1 ou 2, **caractérisé en ce que** les éléments réflecteurs partiels (10, 11) sont réalisés en matière plastique, notamment en matière plastique thermodurcissable.

4. Module d'éclairage (5; 6) selon l'une quelconque des revendications 1 à 3, **caractérisé en ce que**, dans une direction de sortie de lumière (12) du module d'éclairage (5; 6), telle qu'elle est vue par les sources lumineuses (8, 9) est disposé au moins un élément de diaphragme qui réduit la fuite de lumière émise par les sources lumineuses (8, 9) directement dans la direction de sortie de lumière (12), sans réflexion préalable sur l'un des éléments réflecteurs partiels (10, 11).

5. Module d'éclairage (5; 6) selon la revendication 4, **caractérisé en ce qu'**une source lumineuse à semiconducteur supplémentaire est fixée à une face de l'au moins un élément de diaphragme qui pointe dans la direction de sortie de lumière (12).

6. Module d'éclairage (5; 6) selon la revendication 5, **caractérisé en ce qu'**une source lumineuse supplémentaire est conçue pour générer une fonction de signal, notamment un feu clignotant, un feu de jour, une veilleuse et/ou un feu de position.

7. Module d'éclairage (5; 6) selon l'une quelconque des revendications 1 à 6, **caractérisé en ce que** le module d'éclairage (5; 6) présente exactement deux éléments réflecteurs partiels en forme de demi-coquille (10, 11) qui sont disposés et fixés sur des faces mutuellement opposées de l'élément de support (7), dans lequel l'un des éléments réflecteurs (11) est conçu pour générer une distribution lumineuse convergente (17; 17') et l'autre des éléments réflecteurs (10) est conçu pour générer une distribution de lumière diffuse (13) dans la direction horizontale.

8. Module d'éclairage (5; 6) selon la revendication 7, **caractérisé en ce que** le nombre des sources lumineuses (9) qui sont associées à l'élément réflecteur partiel (11) destiné à générer la distribution lumineuse convergente (17; 17') est inférieur au nombre des sources lumineuses (8) qui sont associées à l'élément réflecteur partiel (10) destiné à générer la distribution de lumière diffuse (13).

9. Module d'éclairage (5; 6) selon la revendication 8, **caractérisé en ce que** les sources lumineuses (8, 9) associées à l'un des éléments réflecteurs partiels (10, 11) sont agencées les unes à côté des autres de manière à ce que leur étendue longitudinale soit supérieure à leur largeur et à ce que l'étendue longitudinale s'étende sensiblement parallèlement à un axe optique du module d'éclairage (5; 6).

10. Module d'éclairage (5; 6) selon l'une quelconque des revendications 1 à 9, **caractérisé en ce que** les éléments réflecteurs partiels en forme de demi-coquille (10, 11) présentent approximativement la même distance focale.

11. Dispositif d'éclairage (1) d'un véhicule automobile, comprenant au moins un module d'éclairage (5; 6) selon l'une quelconque des revendications 1 à 10.
